Europäisches Patentamt

European Patent Office

Office européen des brevets

(11) Publication number: **0 327 955**
**A2**

## (12) EUROPEAN PATENT APPLICATION

(21) Application number: 89101776.6

(51) Int. Cl.⁴: **B60C 9/26**

(22) Date of filing: 02.02.89

(30) Priority: 08.02.88 JP 25769/88

(43) Date of publication of application:
16.08.89 Bulletin 89/33

(84) Designated Contracting States:
DE FR IT

(71) Applicant: THE YOKOHAMA RUBBER CO., LTD.
36-11, Shimbashi 5-chome Minato-ku
Tokyo, 105(JP)

(72) Inventor: Shimomura, Iwao
127, Aza Nishimachi Yashiki Noda
Shinshiro-shi Aichi-ken(JP)
Inventor: Kabe, Kazuyuki
15-1, Ikejiri 4-chome Setagaya-ku
Tokyo(JP)

(74) Representative: Weber, Dieter, Dr. et al
Dr. Dieter Weber und Dipl.-Phys. Klaus
Seiffert Patentanwälte
Gustav-Freytag-Strasse 25 Postfach 6145
D-6200 Wiesbaden 1(DE)

(54) Pneumatic radial tire.

(57) A radial tire with such a belt structure that a belt layer provided on the tread portion comprises a plurality of layers, wherein both end portions of each of at least two layers among the layers constituting the belt layer are folded back towards the inside of the tire and the folded portions are integrally overlapped on top of the other.

Fig.2

EP 0 327 955 A2

EP 0 327 955 A2

## PNEUMATIC RADIAL TIRE

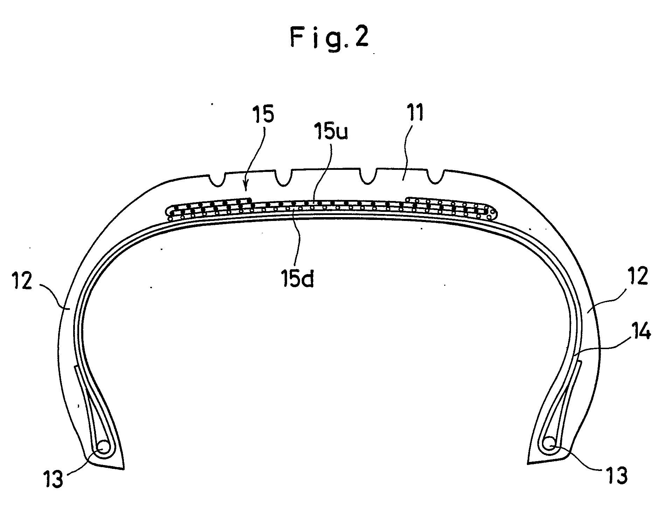

A radial tire basically comprises a carcass layer 14 consisting of cords each substantially perpendicular to the circumferential direction of the tire and having both end portions each folded back about a bead wire 13 from the inside of the tire towards the outside thereof, a belt layer 15 comprising two layers, i.e., an upper belt layer 15u and a lower belt layer 15d, each provided between a tread 11 provided at the center portion of the tire and the carcass layer 14, and a sidewall portion 12 provided on the side portion of the tire, as shown in Fig. 2.

The above-described conventional radial tire is liable to bring about a lowering in the high speed durability because both the end portions of the belt layer will rise during high-speed travelling. Some tires have a belt covering material provided on the outer periphery on each shoulder side of the belt layer for the purpose of preventing the rise of the end portions of the belt layer. However, the provision of the covering material has brought about a drawback that not only the productivity of the tire is lowered but also an uniformity of the tire is lowered or spot abrasion is occurred in order to change in the rigidity in the circumferential direction of the tire by the splice portion formed in the covering material.

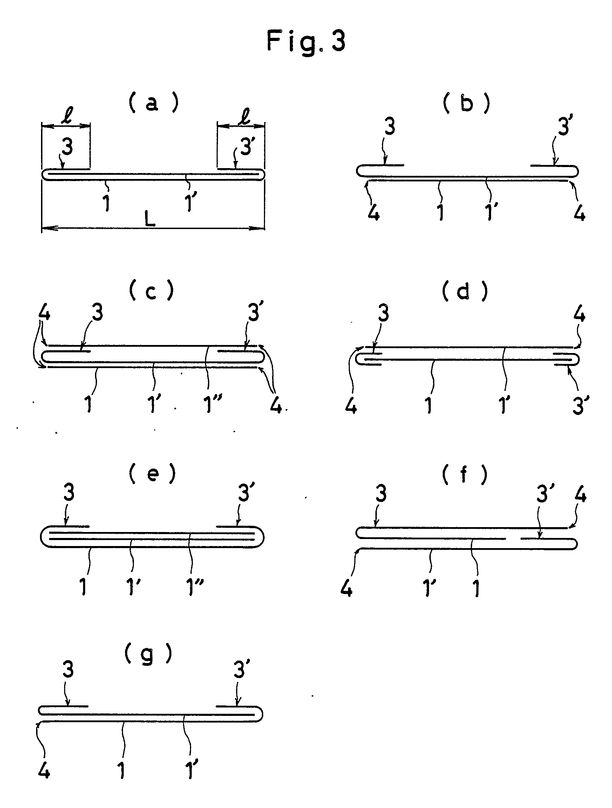

A radial tire having a belt layer wherein both end portions are folded back, i.e., a radial tire having the so-called "folded belt structure" has been proposed as an alternative to the radial tire having a covering material provided on the outer periphery on each shoulder side of the belt layer. Figs. 3(a) to (g) are schematic cross-sectional views of examples of a belt layer having the above-described folded belt structure.

In the tires each having a belt layer structure shown in Figs. 3(b), (c), (d), (f), and (g) among the above-described folded belt structures, edges 4 of the belt layer are exposed on the shoulder portion. This exposure causes the edge portions 4 of the belt layer to be separated because deformation (strain) of the shoulder portion increases during travelling, which lowers the durability of the tire.

In order to eliminate the above-described drawback, a proposal has been made on tires each having a belt layer structure shown in Figs. 3(a) and (e). Although these tires have no edge portion, only one belt layer is folded back towards the inside of the tire. This causes the folded portions 3, 3' to rise by the centrifugal force caused during high-speed travelling, which makes it impossible to satisfy the high speed durability requirement.

An object of the present invention is to provide a pneumatic radial tire improved in not only the high speed durability and heavy-load durability, particularly the former, but also the driving stability over the tire having a conventional folded belt structure.

Fig. 1 is a schematic cross-sectional view of a belt layer structure of the tire having a plurality of belt layers according to the present invention;

Fig. 2 is a cross-sectional view of an example of a radial tire; and

Fig. 3 is a schematic cross-sectional view of a belt layer structure of a conventional tire.

The radial tire of the present invention is characterized by having a belt structure wherein both end portions of at least two layers are folded back towards the inside of the tire and the folded portions are integrally overlapped on top of the other.

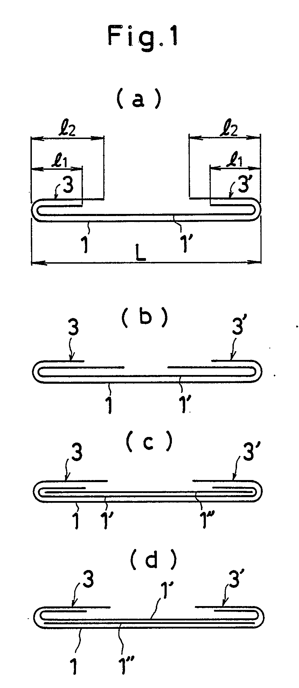

In the tire of the present invention, the belt layer comprising at least two layers may have a structure comprising two layers 1 and 1' shown in Figs. 1(a) and (b) or a structure comprising three layers 1, 1' and 1" shown in Figs. 1(c) and (d). In the former two cases, both end portions of each of two layers 1 and 1' are folded back towards the inside of the tire to form a folded belt structure, while in the latter two cases, both end portions of each of at least two layers 1 and 1' are folded back towards the inside of the tire to form a folded belt structure. These folded portions 3, 3' not only enhances the effect of reinforcing the belt layer, particularly the effect of reinforcing the shoulder side of the belt layer during high-speed travelling but also increases the in-plane flexural rigidity of the entire belt layer, which makes it possible to increase the cornering power of the tire.

Preferably the folded portion widths $\ell_1$ and $\ell_2$ of the belt layer in the folded portions are each 1/8 to 1/2 exclusive of the total width L of the belt layer. When they are each less than 1/8, no sufficient durability during high-speed travelling can be ensured. On the other hand, when they are each 1/2 or above, the edges of the folded portions are overlapped on top of the other at the center portion of the belt layer. This excessively increases the rigidity of the center portion of the belt layer, so that the driving stability is lowered. Further, since this causes the edges of the folded portions to be provided around the center of the tire, the interlaminar shear stress of the belt layer is decreased.

The widths $\ell_1$ and $\ell_2$ of the folded portions of the belt layer having a two-layer structure may be the

2

same or different. However, as shown in Fig. 1(a), when the width $l_2$ of the folded portion of the lower belt layer 1 is larger than the width $l_1$ of the folded portion of the upper belt layer 1′, adhesion between these two belt layers is improved, which effectively prevents the occurrence of the separation.

In the case of a belt layer having a three-layer structure shown in Figs. 1(c) and (d), the end portion of the third belt layer 1″ need not necessarily be folded back. However, in order to prevent the separation between the laminated belt layers, it is preferred to enclose each end of the third belt layer 1″ in the folded portion of the two belt layers 1 and 1′ [Fig. 1(c)] or sandwich the belt layer 1″ between the belt layers 1 and 1′ [Fig. 1(d)].

Further, it is preferred that the cords constituting a belt layer comprising at least two layers having folded end portions are disposed on the bias to each other at an angle of 15° to 30° relative to the circumferential direction of the tire to form a bias folded structure.

As described above, in the tire of the present invention, the separation between belt layers is suppressed through enhancement in the reinforcement of the shoulder side of the belt layer by folding back both end portions of a belt layer comprising at least two layers towards the inside of the tire and integrally overlapping the folded portions on top of the other. This prevents the shoulder side of the belt layer from rising during high-speed travelling, which brings about not only an improvement in the high speed durability and high load durability, particularly the former of the tire but also an increase in the cornering power through an increase in the in-plane flexural rigidity of the belt layer, so that the driving stability is improved.

Further, the tire of the present invention brings about no lowering in the productivity as opposed to the conventional tire having a belt covering material provided on the outer periphery on the shoulder side of the belt layer and has improved uniformity and resistance to uneven abrasion.

Example and Comparative Example

An aromatic polyamide fiber cord of 1500 D/2 was used as a cord material for a belt layer to prepare a belt layer having a cord end count of 52 per 50 mm and a cord angle of 20° relative to the circumferential direction of the tire.

Two belt layers of this type were laminated as shown in Fig. 1(a) to prepare a tire of the present invention having such a folded belt structure and the tire size of 185/60R13 that the folded portion widths $l_1$ and $l_2$ of each belt layer are L/6 and L/4, respectively.

For comparison, a comparative tire having a belt structure shown in Fig. 3(a) was prepared by making use of a belt layer comprising the same cord material and the tire size as that used in the tire of the present invention. In this comparative tire, the folded portion width $l$ of the belt layer was L/4.

These two types of radial tires were evaluated with respect to the high speed durability, load durability, and driving stability.

High speed durability

An indoor drum tester having a drum diameter of 1707 mm was used for this purpose. A tire having an internal pressure of 3.0 kgf/cm$^2$ and a load of 385 kg (JIS design normal load) was mounted on this tester, and the speed of rotation of the drum was increased from an initial speed of 170 km/hr by 10 km/hr for every 10 min until the tire was broken. The speed of rotation required for breaking the tire was used as the measure of the high speed durability and expressed in the form of an index by taking the speed of rotation required for breaking the tire as 100.

Load durability

A tire having an internal pressure of 2.5 kgf/cm$^2$ (JIS max. pressure) and a load of 385 kg (JIS design normal load) was mounted on the same indoor drum tester as that used for the evaluation of the above-described high speed durability and travelled at a speed of 81 km/hr. At this time, the load was increased by a value corresponding to 15% of the initial load for every 4 hr until the tire was broken, and the load required for breaking the tire was used as the measure of the load durability. The load durability was expressed in the form of an index by taking the load required for breaking the tire as 100.

Driving stability

A plate cornering tester was used for this purpose. Specifically, the driving stability was evaluated by making use of the indoor cornering tester under the following conditions and expressed in terms of an index by taking the cornering power (CP) of the comparative tire as 100:

Internal pressure: JIS design normal pressure of 1.9 kgf/cm$^2$

load: JIS design normal load of 385 kg

speed: 10 km/hr

|  | tire of the present invention | comparative tire |
|---|---|---|
| high speed durability | 130 | 100 |
| load durability | 105 | 100 |
| driving stability | 120 | 100 |

As is apparent from the above table, the tire of the present invention is superior to the comparative tire in all of the high speed durability, load durability, and driving stability.

**Claims**

1. A pneumatic radial tire having at a tread portion thereof a belt layer comprising at least two layers, wherein both end portions of each of at least two layers among the layers constituting said belt layer are folded back towards the inside of the tire and the folded portions are integrally overlapped on top of the other.

2. A pneumatic radial tire according to claim 1, wherein the width $l$ of said folded portion is 1/8 to 1/2 exclusive of the total width L of said belt layer.

3. A pneumatic radial tire according to claim 1, wherein the widths of the folded portions of at least two layers of said belt layer are different from each other.

4. A pneumatic radial tire according to claim 1, wherein the folded portion width of the lower belt layer is larger than that of the upper belt layer.

5. A pneumatic radial tire according to claim 1, wherein cords constituting said at least two layers each having folded end portions cross each other at an angle of 15° to 30° relative to the circumferential direction of the tire.

# Fig.1

## ( a )

$\ell_2$    $\ell_2$

$\ell_1$    $\ell_1$

3    3'

1   L   1'

## ( b )

3    3'

1   1'

## ( c )

3    3'

1   1'   1''

## ( d )

3   1'   3'

1   1''

# Fig.2

Fig. 3